# EUROPEAN PATENT APPLICATION

(11) **EP 2 844 027 A1**
(43) Date of publication of application: **04.03.2015**
(21) Application number: 13290204.0
(22) Date of filing: 30.08.2013
(51) Int. Cl.: H04W 88/08

(54) **Interconnecting a radio device with a base station**

(71) Applicant: ALCATEL LUCENT, 92100 Boulogne-Billancourt (FR)
(72) Inventor: Markert, Daniel, 70435 Stuttgart (DE); Haslach, Christoph, Dr., 70435 Stuttgart (DE)
(74) Representative: DREISS Patentanwälte PartG mbB

(57) **Abstract**

The invention relates to a radio device (100) for transmitting and/or receiving radio frequency, RF, signals, wherein said radio device (100) comprises a data exchange interface (110) which is configured to exchange data with a base station (200) for a cellular communications network by means of at least one of:
a. a public and/or private communications network (300),
b. a, preferably local, serial and/or parallel data transmission interface (120).

## Description

### Field of the invention

The invention relates to a radio device for transmitting and/or receiving radio frequency, RF, signals.

The invention further relates to a method of operating radio devices.

The invention further relates to a base station for a cellular communications network and to a host system.

### Background

Conventional base stations for cellular communications networks comprise a radio frequency transmitter/receiver ("transceiver") arrangement collocated with the further base station components such as e.g. baseband signal processing and the like, whereby severe limitations regarding cell planning, cell size and the location of the base station are given.

To mitigate this effect, so-called remote radio heads have been proposed which comprise at least some RF signal processing components and which can be placed "remotely" from the further base station components, the remote radio heads being connected to the further base station components via RF cabling or optical fiber. This RF cabling or optical fiber is quite expensive and rather limited regarding the distance that may be bridged between the base station components and the "remote" radio head.

### Summary

Thus, it is an object of the present invention to provide improved radio devices, base stations and host systems which avoid the disadvantages of conventional systems.

Regarding the above mentioned radio device, this object is achieved by said radio device comprising a data exchange interface which is configured to exchange data with a base station for a cellular communications network by means of at least one of:
a. a public and/or private network,
b. a, preferably local, serial and/or parallel data transmission interface.

This advantageously enables to arrange said radio device remotely from other base station components such as a baseband signal processing and the like while at the same time only requiring existing network infrastructure and/or rather inexpensive serial and/or parallel data transmission interface, in contrast to the RF cabling or optical fiber required for conventional remote radio heads.

According to a preferred embodiment, said public and/or private network comprises a local area network and/or a wide area network and/or the Internet.

According to an embodiment, the data exchange interface of the radio device may comprise an Ethernet interface which advantageously enables to employ standardized and widely available network equipment and networks for establishing the connection to a base station.

According to an embodiment, the data exchange interface of the radio device may comprise a USB (universal serial bus) interface, which enables to connect said radio device to a wide variety of devices. For example, the radio interface may be connected to a base station by means of said USB interface. However, according to a preferred embodiment, it is also possible to connect said radio device by means of the USB interface to a host system which in turn establishes connection with a remote base station, for example via LAN/WAN networks or the Internet.

According to an embodiment, said radio device is configured to exchange data with said base station via a host system, wherein said radio device is configured to be attached to said host system by means of said data exchange interface. For example, according to an embodiment, if the data exchange interface comprises an USB interface, the radio device may be provided in form of a "USB stick", i.e. a comparatively small, pluggable device with a USB interface, which may be connected to standard USB ports of the host system, e.g. a personal computer.

According to an embodiment, said radio device is configured to be supplied with electrical energy via said data exchange interface.

According to an embodiment, said radio device is configured to a) receive data from said base station via said data exchange interface and to transmit one or more RF signals depending on said received data by means of an RF interface and/or to b) receive one or more RF signals, particularly from one or more terminals of said cellular communications network, and to transmit data depending on said received RF signals to said base station by means of said data exchange interface. The aforementioned RF signals may e.g. comprise RF signals or portions of RF signals according to any mobile communications standard such as e.g. 2G, 3G or 4G standards like GSM, UMTS, LTE, and the like. In other words, the radio interface according to an embodiment is capable of handling RF signals or portions thereof similar to the RF transceiver of a conventional base station adhering to the respective communications standard. This particularly holds true for RF frequency bands and/or bandwidths and/or modulation and coding schemes (MCS) and the like. As such, according to an embodiment, the radio device is suitable for replacing conventional remote radio heads regarding their RF signal processing capabilities. At the same time, according to an embodiment, the radio device offers a simplified and versatile data transfer to/from base stations.

According to an embodiment, said radio device is configured to perform at least one of the following functions: a. signal processing of data received from a terminal and/or the base station, particularly upconversion and/or downconversion, digital to analog conversion and/or analog to digital conversion and/or amplification and/or attenuation and/or modulation and/or demodulation.

A further solution to the object of the present invention is given by a method of operating a radio device for transmitting and/or receiving radio frequency, RF, signals, wherein said radio device comprises a data exchange interface which exchanges data with a base station for a cellular communications network by means of at least one of: a. a public and/or private communications network, b. a, preferably local, serial and/or parallel data transmission interface.

A further solution to the object of the present invention is given by a base station for a cellular communications network, wherein said base station is configured to exchange data with at least one radio device for transmitting and/or receiving radio frequency, RF, signals, particularly with a radio device according to the embodiments, by means of at least one of: a. a public and/or private communications network, b. a, preferably local, serial and/or parallel data transmission interface.

According to an embodiment, said base station is configured to, preferably dynamically, exchange data with different ones of said radio devices, whereby a radio coverage of the base station may flexibly be altered, depending on the radio devices currently assigned to the base station and on their locations. Due to the efficient data communication between the radio devices and the base station, e.g. by means of a LAN/WAN or the Internet, nearly arbitrary RF coverage regions may be established by the base station according to an embodiment, simply by assigning different radio devices to the base station.

A further solution to the object of the present invention is given by a host system configured to exchange data with a base station for a cellular communications network by means of at least one of: a. a public and/or private network (e.g., LAN/WAN, Internet), b. a, preferably local, serial and/or parallel data transmission interface, wherein said host system is further configured to exchange data with at least one radio device for transmitting and/or receiving radio frequency, RF, signals, particularly with at least one radio device according to the embodiments.

According to an embodiment, said host system is configured to supply said at least one radio device with electric energy, e.g. via an USB interface which at the same time may serve for data exchange between said radio device and said host system.

According to an embodiment, said host system is configured to perform at least one of the following functions: a. signal processing of data received from the radio device and/or the base station, particularly upconversion and/or downconversion, digital to analog conversion and/or analog to digital conversion and/or amplification and/or attenuation and/or modulation and/or demodulation. According to an embodiment, said host system is at least one of: personal computer, ticket machine, traffic light, home appliance, TV set, or forms part of any of these devices. According to another embodiment, said host system may be any device capable of providing a data link to the BS.

A further solution to the object of the present invention is given by a cellular communications network comprising at least one base station according to the embodiments and at least one radio device according to the embodiments.

### Brief description of the figures

Further features, aspects and advantages of the present invention are given in the following detailed description with reference to the drawings in which:
- Figure 1: depicts a schematic block diagram of a radio device according to an embodiment,
- Figure 2: depicts a schematic block diagram of a base station according to an embodiment,
- Figure 3: depicts a schematic block diagram of a host system according to an embodiment,
- Figure 4: depicts a schematic block diagram of a communications network according to an embodiment,
- Figure 5: depicts a schematic block diagram of a communications network according to a further embodiment, and
- Figure 6: schematically depicts a simplified flow chart of a method according to an embodiment.

### Description of the embodiments

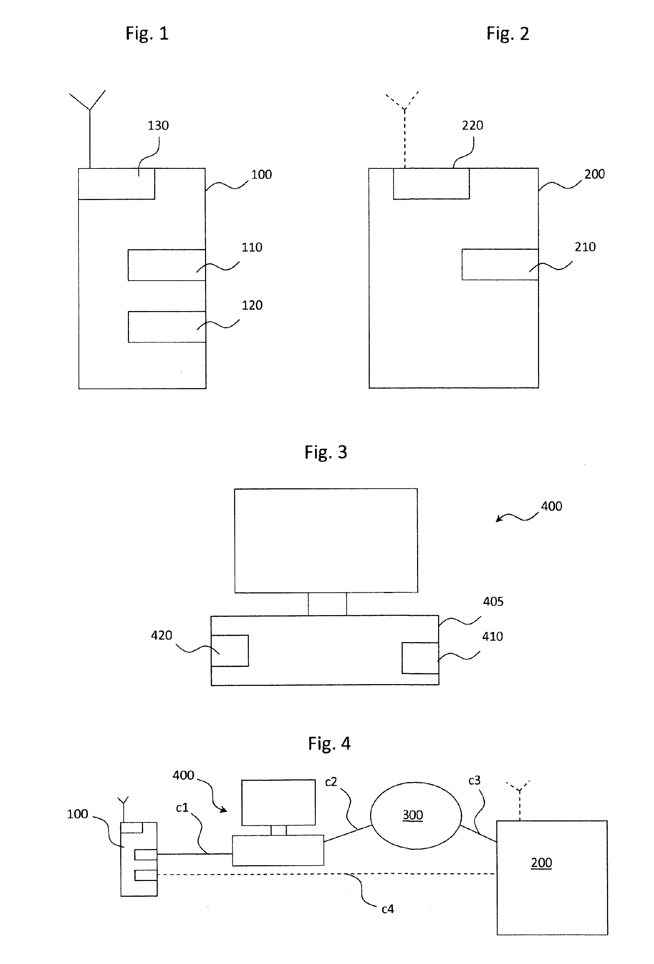

Figure 1 depicts a schematic block diagram of a radio device 100 according to an embodiment. The radio device 100 comprises a data exchange interface 110 which is configured to exchange data with a base station (not shown) for a cellular communications network.

For this purpose, according to an embodiment, the data exchange interface 110 is configured to exchange data with the base station by means of a public and/or private network, such as local area network (LAN) or a wide area network (WAN). Thus, data exchange between the radio device 100 and a remote base station is enabled even if the distance between radio device and base station exceeds some kilometres or more.

According to a further embodiment, the data exchange interface 110 is configured to exchange data with the base station by means of a, preferably local, serial and/or parallel data transmission interface.

According to a further embodiment, it is also possible that the data exchange interface 110 supports both public and/or private network data transmission and a, preferably local, serial and/or parallel data transmission interface.

However, according to the embodiment exemplarily depicted by Fig. 1, the radio device 100 comprises a first data exchange interface 110 configured as Ethernet interface and a separate second data exchange interface configured as USB (universal serial bus) interface 120.

Additionally, for transmitting and/or receiving radio frequency, RF, signals, the radio device 100 comprises an RF interface 130.

According to a preferred embodiment, the radio device 100 is configured to a) receive data from a base station via said data exchange interface 110 and to transmit one or more RF signals depending on said received data by means of said RF interface 130, and/or to b) receive one or more RF signals, particularly from one or more terminals (not shown) of said cellular communications network, and to transmit data depending on said received RF signals to said base station by means of said data exchange interface 110.

Alternatively or in addition to the data exchange interface 110, the USB interface 120 could also be used for such data transmissions.

According to a preferred embodiment, the radio device 100 is configured to perform at least one of the following functions: signal processing of data received from a terminal and/or the base station, particularly upconversion and/or downconversion, digital to analog conversion and/or analog to digital conversion and/or amplification and/or attenuation and/or modulation and/or demodulation.

Thus, signal processing functions usually carried out by RF transceivers of conventional base stations may also be performed by a radio device 100 according to the embodiments. However, by employing the interface 110 and/or 120, a simplified and versatile data exchange between the radio device 100 at least one base station is enabled, which cannot be attained by conventional systems using remote radio heads that are connected to the base station by RF cabling and/or optical fiber.

According to a further embodiment, the radio device 100 is configured to perform at least one of the functions signal processing of data received from a terminal and/or the base station, particularly upconversion and/or downconversion, digital to analog conversion and/or analog to digital conversion and/or amplification and/or attenuation and/or modulation and/or demodulation for only a part of a signal of the communications network, i.e. for only a predetermined frequency band (which according to one embodiment may be smaller than a complete frequency band as defined by the underlying communications standard) and/or for only a predetermined time interval of said signal and/or for only a predetermined code range and the like. This reduces processing requirements and data transmission requirements for the radio device 100 and contributes to providing a system with reduced complexity as compared to a conventional base station. According to a further embodiment, the radio device 100 may preferably be used to provide data services to one or more terminals, rather than voice services or other services with high real-time requirements.

The radio device 100 according to the embodiments advantageously enables to use existing public and/or private network infrastructure such as LAN/WAN, Internet and/or PAN (personal area network) mechanisms or "short-range" wired or wireless data exchange to establish data communication between the radio device 100 and a base station of a cellular communications network such as e.g. a UMTS or LTE / LTE-Advance base station ("eNodeB").

The amount of signal processing capabilities offered by the radio device 100 depends on the specific implementation. According to an embodiment with very low complexity, the radio device 100 receives data to be transmitted over an air interface from a base station via interface 110, e.g. by using an Ethernet-type network, for example the Internet, and the radio device 100 transforms so received data to a corresponding RF signal for transmission, e.g. over at least one antenna connected to the RF interface 130 of the radio device. In this embodiment, a high degree of signal processing is performed in the base station. The same principle is also applicable for the RF receive case, wherein the radio device 100 receives RF signals, e.g. from one or more terminals served by the base station. After receiving, the radio device 100 converts the received RF signals, e.g. into a digital data stream (for example by sampling and analog to digital conversion), which is forwarded over the Ethernet interface 110 to a remote base station.

According to a further embodiment, the radio device 100 may also perform further signal processing steps upon receipt and analog to digital conversion such as e.g. demodulation and the like, before the so processed data is forwarded to the base station.

Fig. 2 schematically depicts a base station 200 according to an embodiment. The base station 200 is configured to exchange data with at least one radio device 100 (Fig. 1) for transmitting and/or receiving radio frequency, RF, signals, by means of at least one of:
a. a public and/or private communications network,
b. a, preferably local, serial and/or parallel data transmission interface.

For this purpose the base station 200 may be equipped with a corresponding interface 210 (e.g. Ethernet or USB or the like). Thus, the base station 200 may exchange data with the radio device 100 (Fig. 1) via its interface 210 and the corresponding interface 110 and/or 120 of the radio device 100. In effect, the base station 200 may use the radio device 100 as its only radio interface. Data and/or control signals to be transmitted in a downlink direction to terminals served by the base station 200 may be sent in appropriate form to the radio device 100 over the interfaces 210, 110/120, whereby public and/or private networks may be used, e.g. the Internet. Upon receipt of such data, the radio device 100 generates corresponding RF signals and transmits them via its RF interface 130.

According to a further embodiment, the base station 200 (Fig. 2) may also comprise an own local RF interface 220 which may be used in a per se known manner. In this setting, the base station 200 may use the local RF interface 220 as usual and may additionally use the connected radio device 110 like a further, possible remote, RF interface. Thereby, the base station 200 may e.g. provide a macro-cell with RF interface 220 and a pico-cell with radio device 100. According to a further embodiment, a multi-antenna system may be formed by combining a local RF interface 220 of the base station with one or more RF interfaces of the radio device 100 according to an embodiment (or with several RF interfaces of the radio device 100, i.e. without including a base station RF interface 220), whereby MIMO schemes and/or space diversity may be applied.

According to a further embodiment, many different radio devices 100 may, preferably dynamically, be assigned to a base station 200, whereby a rapid reconfiguration of an RF coverage area provided by the base station 200 is enabled. E.g., if the RF coverage area is to be further expanded, the base station 200 may simply contact further available radio devices 100 and assign them for RF data transmission/reception.

Figure 3 depicts a schematic block diagram of a host system 400 according to an embodiment. The host system 400 is configured to exchange data with a base station 200 (Fig. 2) for a cellular communications network by means of at least one of: a public and/or private network (e.g. Ethernet), a, preferably local, serial and/or parallel data transmission interface (e.g., USB). Said host system 400 is further configured to exchange data with at least one radio device 100 (Fig. 1) for transmitting and/or receiving radio frequency, RF, signals.

Presently, the host system 400 comprises an Ethernet interface 410 and an USB interface 420. According to an embodiment, the host system 400 may e.g. be a personal computer, which comprises the interfaces 410, 420.

Figure 4 depicts a schematic block diagram of a communications network according to an embodiment. The network comprises a base station 200 as explained above with reference to Fig. 2, a radio device 100 as explained above with reference to Fig. 1, and a host system 400 as explained above with reference to Fig. 3.

A first data connection c1 between the radio device 100 and the host system 400 is established by means of a USB connection, cf. the USB interfaces 120, 420 of the devices 100, 400 as explained above.

A second data connection c2, c3 between the host system 400 and the base station 200 is established by means of Ethernet connections via the Internet 300, also cf. the Ethernet/LAN interfaces 210, 410 of the devices 200, 400 as explained above. Alternatively to the Internet 300, a private LAN or WLAN or the like may be used.

According to a particularly preferred embodiment, the host system 400 is configured to supply the radio device 100 with electric energy, which is presently achieved via the USB interfaces 120, 420, cf. connection c1 of Fig. 4.

In the exemplary configuration depicted by Fig. 4, the host system 400 serves as a "gateway" between the radio device 100 and the base station 200. The radio device may e.g. be designed as a plug-in USB device which receives electrical energy from the host system 400. At the same time, host system 400 provides network and/or Internet connectivity to the radio device 100 so that data exchange between components 100, 200 is enabled.

Alternatively or in addition to the depicted connections c1, c2, c3, a direct connection c4 between components 100 and 200 may also be provided which may e.g. be implemented in form of an RF and/or optical and/or wired connection. Optionally, the radio device 100 may also directly, i.e. without the host system 400, contact the base station 200, optionally via the network or Internet 300.

According to a further embodiment, the host system 400 (Fig. 4) is configured to perform at least one of the following functions: signal processing of data received from the radio device and/or the base station, particularly upconversion and/or downconversion, digital to analog conversion and/or analog to digital conversion and/or amplification and/or attenuation and/or modulation and/or demodulation. Thus, radio device 100 may be designed with low complexity, and the host system 400 may perform substantial signal processing at a location close to that of the radio device 100. This is particularly beneficial if the host system 400 is a general purpose device such as a personal computer which may easily be configured for the required signal processing by software and/or hardware.

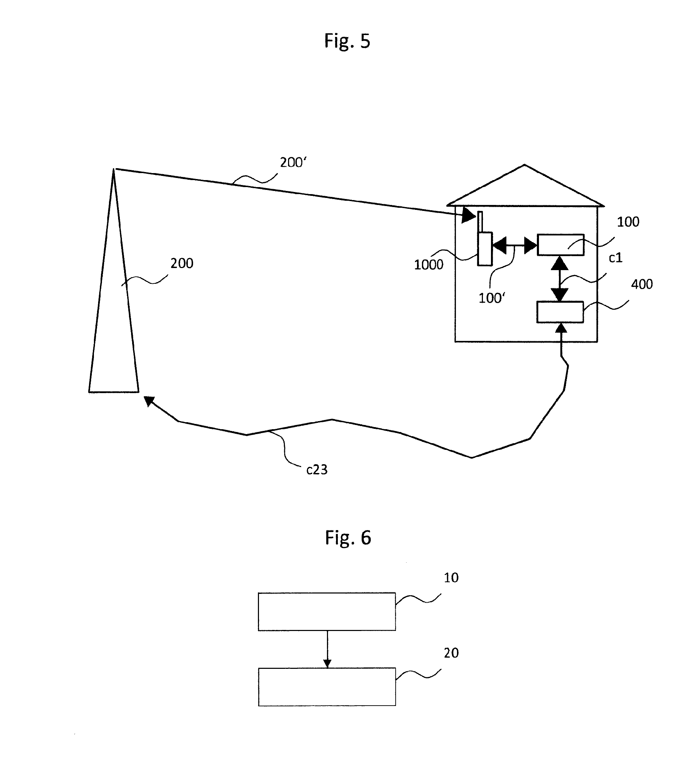

Fig. 5 depicts an operational scenario according to a further embodiment. Radio device 100 is provided in form of a USB stick which is attached to a ticket machine (e.g. of a public bus or railway station) serving as a host system 400 according to the embodiments. For this purpose, the calculating unit of the ticket machine 400, which may be a personal computer according to an embodiment, is equipped with a USB port (not shown) to receive the radio device 100. Correspondingly, connection c1 depicted by Fig. 5 is an USB connection. An Ethernet connection c23 is provided to connect the host system 400 with a remote base station 200.

Reference numeral 200' indicates a conventional radio path from an antenna of the base station 200 to the terminal 1000 served by the base station. As this path 200' is rather long, it experiences corresponding attenuation and other well-known adverse effects (multi-path propagation, fading, and the like).

In contrast, the radio path 100' enabled by the radio device 100 and its RF interface 130 (Fig. 1) to terminal 1000 is rather short, whereby the adverse effects of path 200' may be avoided. In other words, to efficiently serve the terminal 1000 which is currently located indoors, e.g. in a railway station building, the base station may choose to employ radio device 100 for establishing an air interface with the terminal 1000, instead of its own antenna. User data and control information required to be exchanged between devices 1000 and 200 is exchanged over the air interface 100' of radio device 100 and the data connections c1, c23 according to the embodiment.

Figure 6 schematically depicts a simplified flow chart of a method according to an embodiment. In step 10, the radio device 100 receives data to be transmitted over an air interface in form of an RF signal to one or more terminals from a base station 200 via Ethernet interface 110. In step 20 (Fig. 6), the radio device 100 generates a corresponding RF signal depending on said received data and transmits said RF signal via its own radio interface 130.

The principle of the embodiments enables to provide one or more comparatively small radio cells for a base station of a cellular communications network in a rather flexible and efficient manner. This contributes to reduce energy consumption which e.g. arises from the path loss over air with conventional base station RF cell scenarios. Longer distances and attenuation, e.g. by walls, require high radiating power. This can be avoided by introducing smaller cells by means of the radio device according to the embodiments. In contrast to conventional remote radio heads which require expensive specific RF cabling or optical fibers, the radio device according to the embodiments may efficiently be contacted by means of public or private networks thus using existing communications infrastructure.

Another huge challenge is the required RF cell capacity in populated areas. In many cases, the available data rates for individual users provided by conventional macro cells is not sufficient any more. Furthermore, required capacity of networks is more and more variable over time and locations, e.g. if special events take place or meetings are held. It is becoming more and more difficult for providers to adapt to the varying demands. These problems may also be solved by the radio device 100 according to the embodiments, since the RF coverage of a base station 200 may easily be expanded/reduced as need by adding or removing radio devices 100.

The principle according to the embodiments enables to flexibly deploy smaller radio cells, which helps to decrease a distance between sender (e.g. base station) and receiver (e.g. terminal) and thereby lower path loss and attenuation. At the same time, the number of users per cell is decreased and thereby capacity is increased.

Advantageously, the principle according to the embodiments does not require full base station functionality located at the place of the radio devices 100. Rather, standardized networks 300 may be used for data exchange between the distributed radio devices 100 and a base station 200 using these distributed radio devices 100 to expand its RF cell coverage. Thereby, the usually rather high hardware expenses per user known from conventional systems may be reduced.

Moreover, the principle according to the embodiments offers additional degrees of freedom regarding placement of the base station 200 and the radio devices 100. Since radio devices 100 according to the embodiments can be designed rather small, e.g. in USB stick shape, they may be deployed virtually anywhere, while only one specific site for accommodating the base station 200 has to be identified.

According to some embodiments which are based on the host system 400, the resources of an existing host system may be used, even though the host system 400 is not primarily designed for a base station application or similar. For example, suitable host systems 400 according to an embodiment may be traffic lights, refrigerators or other home appliances, notebooks, advertising signs, and the like, as long as they are or can be configured to exchange data with a base station 200 for a cellular communications network by means of at least one of a public and/or private network 300, a, preferably local, serial and/or parallel data transmission interface, and to exchange data with at least one radio device 100 for transmitting and/or receiving radio frequency, RF, signals. For example, an electronic cash register with Internet connectivity 410 and USB port 420 may serve as a host system 400 according to an embodiment if the data exchange between devices 100, 200 is supported/enabled by the cash register.

Advantageously, according to an embodiment, the host system 400 offers electric power supply and Internet connectivity to the radio device 100.

According to a further embodiment, it is also possible to use processing power, e.g. of a CPU of a PC serving as host system 400, or other resources. These, preferably existing, resources may e.g. be used to reduce complexity and costs of the radio device 100 and/or the base station node 200.

According to a further embodiment, the radio device 100, which is also termed "parasitic node (PN)" by the inventors, may use resources of the host system 400. According to one embodiment, the parasitic node can represent either full base station functionality or only a part of it. The functionality can be either in the radio device 100 itself, which may be attached to a host system 400, or the host system 400 can provide a part of the functionality (e.g. software implementing base station functions such as modulation/demodulation, said software running on a PC platform representing the host system).

According to a further embodiment, it is also possible to use the radio device 100 (= parasitic node, PN) as a substitution for the air-link or air interface, respectively. Thus, a base station 200 can use a PN to avoid path loss, interference or to increase diversity.

For example, according to a further embodiment, instead of upconversion, amplification and transmission at the antenna of a conventional BS, the transmit data is sent via internet 300 (Fig. 4) to the host system 400. The host system 400 forwards this data to the PN and the PN does the upconversion and amplification. The signal is again sent over air, but the power can be much lower.

According to a further embodiment, the split, where certain functionalities (e.g. upconversion, or other signal processing) are executed, depends on the available resources, e.g. bandwidth of the connection c1 (Fig. 4) between host system 400 and PN 100 or the computational resources available at the PN 100 and host system 400.

According to a further embodiment, the PN (or radio device 100) will be connected to a standard port, e.g. a USB port 420 (Fig. 3). It preferably provides power and data connection inherently. According to a further embodiment, possible host systems 400 may be ticket machines, traffic lights, home PCs, refrigerator, TV sets etc. These systems 400 are not necessarily required to belong to an operator who deploys the PNs. According to a further embodiment, to ensure security and data integrity, data exchange between devices 200, 400, 100 may be performed in an encrypted fashion.

According to a further embodiment, one significant advantage of the base station 200 compared to state of the art radio cell solutions is that the PNs 100 are supplementary to state-of-the -art base stations, i.e. the PNs 100 may be used in addition to existing base stations and their RF interfaces 220 (Fig. 2).

According to a further embodiment, PNs 100 provide the capability to increase wireless network capacity, to reduce interference, to reduce the power consumption for a very low price. Nevertheless, a single PN 100 may provide less availability and reliability compared to conventional BS systems. But due to the fact that they are supplemantary to the conventional base station and that they may easily and efficiently be provided and deployed in large quantitites, slightly reduced availability of a single node can be tolerated. E.g., if a single PN 100 is suffering from a blocker, this PN's functionality may be handled by the Macro BS 200 or a neighboring PN 100.

One significant advantage of the radio device 100 according to the embodiments is its comparatively low complexity and low cost, compared to state of the art small cell solutions. Hence, according to one embodiment, it is tolerable to use specific PNs 100 only when required due to its low costs.

According to a further embodiment, for example in the case that the PNs 100 are only used as an access point of other base stations 200, the allocation to the base stations 200 can be fixed or adaptive. According to a further embodiment, the PN 100 will be allocated to a base station 200 based on optimization of power consumption, capacity, coverage or to minimize the number of dropped calls/lost connections.

According to a further embodiment, dependent on the type and/or speed of the particular connections c1, c2, c3 (Fig. 4) it might be advantageous to use the channel provided via PN 100 only for data traffic with terminals, not voice or other real-time traffic.

According to a further embodiment, a big advantage for the operators is that not only the power consumption can be reduced, but also that the remaining power consumption on the PN side might be supplied by a third party, e.g. the owner of the host system 400 (Fig. 4).

According to a further embodiment, there are multiple aspects why end-users/customers and companies may benefit from attaching PNs 100 to their systems 400:
- Customers can increase signal quality and achieve higher data rates with low effort (device 100 should be very cheap or even free and plug&play)
- Companies/organizations/manufacturer could use the cellular network offered by the PN 100 for less money
- Companies/organizations/manufacturer could use the cellular network offered by the PN 100 to connect own devices which may not have a wired connection
- Companies/organizations/manufacturer could build an own subnetwork

According to a further embodiment, the wireless communication 100' between PN 100 and user equipment (UE) 1000 (Fig. 5) can use the same resources as the base station 200 or a conventional base station. It is also possible that one or more dedicated resources, e.g. frequency band and/or codes and/or time slots, are reserved for this communication, i.e. the air interface of the radio device 100. This would allow not only to replace the direct air connection 200' (Fig. 4) between the base station 200 and the terminal 1000, but increase data rates.

According to a further embodiment, the communication between base station 200 and PN 100 will preferably use the Internet. It is also possible to use separate channels even though this would reduce the gain compared to SoA. The communication between base station 200 and PN 100 over connections c2 and/or c1 and/or c3 and/or c23 (Fig. 4) can use SoA protocols, e.g. CPRI. It is also possible to encode SoA protocols and use a TPC/IP or to transmit data directly by TPC/IP.

According to a further embodiment, the following scenario is proposed.
- The radio device 100 is implemented in form of a Plug&Play "USB stick"
- The radio device 100 is powered by USB, data from/to radio device 100 is tunneled through host OS of the host system 400
- Any close base station 200 uses USB-device 100 as "antenna" or as kind of remote radio head with reduced functionality (functional split depends on implementation)
- Complex Processing is preferably done in base station 200, less complex processing in USB-device 100
- Minimal hardware requirements for radio device 100, e.g. only single TX, RX or TRX IC + USB interface required
- Target hosts 400: any device with power and Ethernet connection
- In order to reduce traffic between USB-device 100 and base station 200, more processing can be shifted towards USB device 100. Processing can either be done in a dedicated ASIC and/or by sharing the CPU of host device 400

According to a further embodiment, the following scenario is proposed.
- The radio device 100 is implemented in form of a Plug&Play USB stick
- The radio device 100 is powered by USB
- full base station functionality is provided by software running on host CPU of host system 400
- the host system together with the radio device 100 represents an independent base station which is not required to be allocated to another base station 200
- Target hosts 400: suitable hardware, most likely PCs

A further significant advantage of the radio device according to the embodiments is the fact that the radio device can be operated with a more limited range as compared to conventional base stations (i.e., smaller cells or only local coverage such as e.g. indoor coverage within a room of a building or the like), and less stringent filter requirements apply. Due to the flexibility of the system according to the embodiments, specific radio devices may - at least temporarily - be deactivated if severe RF signal interference (in the uplink and/or in the downlink) from further devices is experienced.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Radio device (100) for transmitting and/or receiving radio frequency, RF, signals, wherein said radio device (100) comprises a data exchange interface (110) which is configured to exchange data with a base station (200) for a cellular communications network by means of at least one of:
a. a public and/or private network (300),
b. a, preferably local, serial and/or parallel data transmission interface (120).

2. Radio device (100) according to claim 1, wherein said public and/or private network (300) comprises a local area network and/or a wide area network and/or the Internet.

3. Radio device (100) according to one of the preceding claims, wherein said serial and/or parallel data transmission interface (120) is a USB interface.

4. Radio device (100) according to one of the preceding claims, wherein said radio device (100) is configured to exchange data with said base station (200) via a host system (400), wherein said radio device (100) is configured to be attached to said host system (400) by means of said data exchange interface (110).

5. Radio device (100) according to one of the preceding claims, wherein said radio device (100) is configured to be supplied with electrical energy via said data exchange interface (110).

6. Radio device (100) according to one of the preceding claims, wherein said radio device (100) is configured to a) receive data from said base station (200) via said data exchange interface (110) and to transmit one
or more RF signals depending on said received data by means of an RF interface (130) and/or to b) receive one or more RF signals, particularly from one or more terminals of said cellular communications network, and to transmit data depending on said received RF signals to said base station (200) by means of said data exchange interface (110).

7. Radio device (100) according to one of the preceding claims, wherein said radio device (100) is configured to perform at least one of the following functions:
a. signal processing of data received from a terminal (1000) and/or the base station (200), particularly upconversion and/or downconversion, digital to analog conversion and/or analog to digital conversion and/or amplification and/or attenuation and/or modulation and/or demodulation.

8. Method of operating a radio device (100) for transmitting and/or receiving radio frequency, RF, signals, wherein said radio device (100) comprises a data exchange interface (110) which exchanges data with a base station (200) for a cellular communications network by means of at least one of:
a. a public and/or private communications network (300),
b. a, preferably local, serial and/or parallel data transmission interface (120).

9. Base station (200) for a cellular communications network, wherein said base station (200) is configured to exchange data with at least one radio device for transmitting and/or receiving radio frequency, RF, signals, particularly with a radio device (100) according to one of the claims 1 to 7, by means of at least one of:
a. a public and/or private communications network (300),
b. a, preferably local, serial and/or parallel data transmission interface (120).

10. Base station (200) according to claim 9, wherein said base station (200) is configured to, preferably dynamically, exchange data with different ones of said radio devices (100).

11. Host system (400) configured to exchange data with a base station (200) for a cellular communications network by means of at least one of:
a. a public and/or private network (300),
b. a, preferably local, serial and/or parallel data
transmission interface,
wherein said host system (400) is further configured to exchange data with at least one radio device (100) for transmitting and/or receiving radio frequency, RF, signals, particularly with at least one radio device (100) according to one of the claims 1 to 7.

12. Host system (400) according to claim 11, wherein said host system (400) is configured to supply said at least one radio device (100) with electric energy.

13. Host system (400) according to one of the claims 11 to 12, wherein said host system (400) is configured to perform at least one of the following functions:
a. signal processing of data received from the radio device (100) and/or the base station (200), particularly upconversion and/or downconversion, digital to analog conversion and/or analog to digital conversion and/or amplification and/or attenuation and/or modulation and/or demodulation.

14. Host system (400) according to one of the claims 11 to 13, wherein said host system (400) is at least one of:
personal computer, ticket machine, traffic light, home appliance, TV set.

15. Cellular communications network comprising at least one base station (200) according to one of the claims 9 to 10 and at least one radio device (100) according to one of the claims 1 to 7.
